# EUROPÄISCHE PATENTSCHRIFT

(11) **EP 4 285 490 B1**
(45) Veröffentlichungstag und Bekanntmachung des Hinweises auf die Patenterteilung: **13.05.2026**
(21) Anmeldenummer: 22709184.0
(22) Anmeldetag: 25.01.2022
(51) Int. Cl.: H04B 3/00, H04B 3/30

(54) **VERFAHREN UND TEILNEHMER ZUR ÜBERTRAGUNG VON DATEN IN EINEM SERIELLEN KOMMUNIKATIONSBUSSYSTEM UND KOMMUNIKATIONSBUSSYSTEM**
COMMUNICATION BUS SYSTEM, METHOD, AND SUBSCRIBER FOR TRANSMITTING DATA IN A SERIAL COMMUNICATION BUS SYSTEM
PROCÉDÉ ET ABONNÉ DESTINÉS AU TRANSFÉRER DES DONNÉES DANS UN SYSTÈME DE BUS DE COMMUNICATION SÉRIE ET SYSTÈME DE BUS DE COMMUNICATION

(30) Priorität: 26.01.2021 EP 21153488
(43) Veröffentlichungstag der Anmeldung: 06.12.2023
(73) Patentinhaber: Elmos Semiconductor SE, 51379 Leverkusen (DE)
(72) Erfinder: MAURER, Peter, 44227 Dortmund (DE); FRONEN, Rob, 44227 Dortmund (DE)
(74) Vertreter: dompatent
(86) Internationale Anmeldenummer: PCT/EP2022/051532
(87) Internationale Veröffentlichungsnummer: WO 2022/161917

(56) Entgegenhaltungen:
- DE-B3- 102018 104 865
- US-A- 5 485 488

## Beschreibung

Die Erfindung betrifft ein Verfahren zur Übertragung von Daten in einem seriellen Kommunikationsbussystem. Bei diesem Kommunikationsbussystem ist ein Busmaster mit der Reihenschaltung einer Vielzahl von Teilnehmern seriell verbunden. Das Kommunikationsbussystem weist einen mit einem vorgegebenen Common-Mode-Sollpegel zu betreibenden, differenziellen Zweidrahtdatenbus für die Datenübertragung mittels differenzieller elektrischer Signale von dem Busmaster zu mindestens einem der Teilnehmer auf. Zwischen den Busanschlüssen des Busmasters und dem zu diesem benachbarten Teilnehmer der Reihenschaltung von Teilnehmern befindet sich ein Zweidrahtleitungsabschnitt. Derartige Zweidrahtleitungsabschnitte verbinden auch die Teilnehmer innerhalb der Reihenschaltung von Teilnehmern. Jeder Teilnehmer weist einen Eingang mit zwei Eingangsanschüssen, die an einen Zweidrahtleitungsabschnitt angeschlossen sind, und einen Ausgang mit ebenfalls zwei Ausgangsanschlüssen auf, die mit einem Zweidrahtleitungsabschnitt verbunden sind. Bis auf den letzten Teilnehmer der Reihenschaltung von Teilnehmern sind die Ausgänge mit einem Zweidrahtleitungsabschnitt verbunden. Ferner betrifft die Erfinder einen Teilnehmer für den Einsatz bei einem Verfahren zur Übertragung von Daten in einem seriellen Kommunikationsbussystem. Schließlich betrifft die Erfindung auch Kommunikationsbussystem mit mehreren derartigen Teilnehmern und zur Übertragung von Daten.

Derartige Daisy-Chain-Kommunikationsbussysteme sind grundsätzlich bekannt und werden wegen ihres einfachen Aufbaus und ihrer damit verbundenen kostengünstigen Konstruktion bevorzugt verwendet, wenn es darum geht, die Teilnehmer eines Kommunikationsbussystems über den Transport von seriellen elektrischen Signalen zu steuern. Dabei empfängt ein Teilnehmer an seinem Eingang vom Ausgang seines zum Busmaster hin (d.h. stromauf) benachbarten Teilnehmers einen Datenstrom, erkennt diesen und erzeugt einen identischen Datenstrom an seinem Ausgang zum Weiterleiten an seinen stromab benachbarten Teilnehmer (sofern der Datenstrom nicht oder nicht nur für den besagten Teilnehmer bestimmt ist). Daisy-Chain-Kommunikationsbussysteme eignen sich insbesondere für lichttechnische Anwendungen innerhalb und außerhalb eines Fahrzeugs, und zwar beispielsweise für Ambient Light Applications.

Ein gewisser Nachteil von Daisy-Chain-Kommunikationsbussystemen ist darin zu sehen, dass die Kommunikation auf dem Bus grundsätzlich stets vom Busmaster zu zumindest einem (oder auch sämtlichen der) Teilnehmer erfolgt. Mitunter ist es aber wünschenswert, dass die Teilnehmer zumindest Statusinformationen wie beispielsweise die Quittierung der Vergabe einer Adresse an einen Teilnehmer, an den Busmaster zurückmelden.

Konzepte für einen derartigen sozusagen "upstream" Kommunikationskanal sind in US-A-5 485 488, aus der ein Verfahren nach dem Oberbegriff des Anspruchs 1 bekannt ist, und in US-B-6 813 483 beschrieben. Diese Konzepte sind aber relativ aufwendig in der Implementierung.

Insoweit ist es eine Aufgabe der Erfindung, ein vereinfachtes Konzept für die Kommunikation in einem seriellen Kommunikationsbussystem in zur Kommunikationsrichtung mit differenziellen elektrischen Signalen entgegengesetzter Richtung von einem oder mehreren der Teilnehmer zum Busmaster hin zu schaffen. Aus DE-B-10 2018 104 865 sind eine Vorrichtung zur Ansteuerung elektrischer und/oder elektronischer Komponenten eines Kfz-Moduls und ein derartiges Kfz-Modul mit automatischer Moduladressierung mit Taktsynchronisation bekannt.

Zur Lösung dieser Aufgabe schafft die Erfindung ein Verfahren zur Übertragung von Daten in einem seriellen Kommunikationsbussystem, bei dem ein Busmaster und eine Vielzahl von Teilnehmern als Reihenschaltung mit einem Zweidrahtleitungsabschnitt zwischen Busanschlüssen des Busmasters und einem der Teilnehmer sowie mit jeweils benachbarte Teilnehmer verbindenden Zweidrahtleitungsabschnitten eines bei einem vorgegebenen Common-Mode-Sollpegel zu betreibenden, differenziellen Zweidrahtdatenbus für eine Datenübertragung mittels differenzieller elektrischer Signale (z.B. differenzieller Spannungssignale) von dem Busmaster zu mindestens einem der Teilnehmer verbunden ist, wobei jeder Teilnehmer einen Eingang mit zwei mit einem Zweidrahtleitungsabschnitt verbundenen Eingangsanschlüssen und einen Ausgang mit zwei ebenfalls mit einem Zweidrahtleitungsabschnitt verbundenen Ausgangsanschlüssen aufweist, wobei bei dem Verfahren
- Daten von einem ersten Teilnehmer zu dem Busmaster über den Zweidrahtdatenbus in einer zur Datenübertragung mittels differenzieller elektrischer Signale entgegengesetzten Richtung übertragen werden, indem
   a) ein erster Teilnehmer an seinen Eingangsanschlüssen zur Übertragung von Daten mittels nicht-differenzieller Signale zu einem über einen Zweidrahtleitungsabschnitt verbundenen, benachbarten zweiten Teilnehmer wiederholt pulsartig einen Datenübertragungsstrom mit einer vorgegebenen Größe einspeist oder entnimmt,
   b) der zweite Teilnehmer an seinen Ausgangsanschlüssen zur Beibehaltung des vorgegebenen Common-Mode-Sollpegels wiederholt pulsartig einen dem Datenübertragungsstrom entsprechenden Kompensationsstrom entnimmt oder einspeist, wobei ein im zweiten Teilnehmer erzeugter Kompensationsstrompuls mit der zur Beibehaltung des Common-Mode-Sollpegels erforderlichen Größe eine binäre Datenübertragung von dem ersten Teilnehmer an den zweiten Teilnehmer repräsentiert,
   c) dieser zweite Teilnehmer an seinen Eingangsanschlüssen zur Übertragung von Daten mittels nicht-differenzieller Signale zu einem über einen Zweidrahtleitungsabschnitt benachbarten dritten Teilnehmer wiederholt pulsartig einen Datenübertragungsstrom mit der vorgegebenen Größe einspeist oder entnimmt,
   d) die Schritte b) und c) für jeden zwischen dem ersten Teilnehmer und dem Busmaster angeordneten Teilnehmer durchgeführt werden und
   e) der Busmaster an seinen mit einem Zweidrahtleitungsabschnitt verbundenen Busanschlüssen zur Beibehaltung des vorgegebenen Common-Mode-Sollpegels wiederholt pulsartig einen Kompensationsstrom entnimmt oder einspeist, wobei ein im Busmaster erzeugter Kompensationsstrompuls mit der zur Beibehaltung des Common-Mode-Sollpegels erforderlichen Größe eine binäre Datenübertragung von dem mit dem Busmaster über einen Zweidrahtleitungsabschnitt verbundenen Teilnehmer an den Busmaster repräsentiert, womit die Datenübertragung von dem ersten Teilnehmer zum Busmaster abgeschlossen ist.

Die Erfindung macht sich die Analyse der Regelung des Common-Mode-Pegels auf dessen Sollpegel zu nutze. Die beiden Leitungen des Zweidrahtdatenbus werden auf einem gemeinsamen Spannungspegel gegenüber ein und demselben Referenzpotential, beispielsweise Masse, gehalten, wenn keine Daten übertragen werden. Zum Übertragen der Daten von Teilnehmer zu Teilnehmer vom Busmaster ausgehend in Richtung zum letzten Teilnehmer hin werden nun in bekannter Weise differenzielle elektrische Signale übertragen, indem ein Teilnehmer an seinem Eingang in die eine Zweidrahtleitung einen Strom einspeist und der anderen Zweidrahtleitung entnimmt. Dies erzeugt am Eingang des stromab benachbarten Teilnehmers wegen eines Widerstandes (nämlich beispielsweise eines Abschlusswiderstandes) zwischen den beiden Zweidrahtleitungen eine differenzielle Spannung, die ausgewertet wird.

Zum Übertragen von Daten in umgekehrter Richtung, d.h. von einem Teilnehmer zum Busmaster, speist nun erfindungsgemäß ein Teilnehmer an seinen Eingangsanschlüssen einen Strom pulsartig und wiederholt ein. Dieser Strom wird im Folgenden Datenübertragungsstrom genannt. Er hat eine vorgegebene Größe. Die Folge des Einspeisens (oder auch des Entnehmens) dieses pulsartigen Datenübertragungsstrom ist nun, dass der Teilnehmer, dessen Ausgang mit dem Eingang des besagten Teilnehmers verbunden ist, versucht, den Common-Mode-Sollpegel auf dem besagten Zweidrahtleitungsabschnitt beizubehalten. Hierzu speist dieser Teilnehmer an seinem Ausgang in den Zweidrahtleitungsabschnitt einen Kompensationsstrom ein, wenn der benachbarte Teilnehmer für die Datenübertragung einen Datenübertragungsstrom entnommen hat. Wenn dieser Teilnehmer für die Datenübertragung einen Datenübertragungsstrom einspeist, so entnimmt der benachbarte Teilnehmer an seinem Ausgang den Kompensationsstrom, so dass der Common-Mode-Sollpegel ausgeregelt bleibt und es somit nicht zu Veränderungen und vor allem nicht zu sprunghaften Veränderungen des Common-Mode-Sollpegels kommt. Derartige sprunghafte Änderungen würden zu zusätzlichen EMF-Problemen führen, was wiederum durch Gegenmaßnahmen in ihren Wirkungen kompensiert werden müsste. Das alles ist bei der Erfindung nicht erforderlich.

Durch dieses Konzept wird also eine Übertragung von Daten von dem zuvor genannten ersten Teilnehmer an dessen benachbarten Teilnehmer realisiert. Hierbei ist entscheidend, dass sich der Common-Mode-Sollpegel auf dem besagten Zweidrahtleitungsabschnitt nicht ändert. Es wird also für die Datenübertragung beispielsweise kein Common-Mode-Pegelsprung o.dgl. genutzt, sondern vielmehr wird der zur Ausregelung und Beibehaltung des Common-Mode-Sollpegels erforderliche Kompensationsstrom analysiert und seine pulsartige Änderung als binäre Datenübertragung an dem besagten Teilnehmer interpretiert.

Damit sich der Common-Mode-Sollpegel auf dem zwei Teilnehmer verbindenden Zweidrahtleitungsabschnitt letztendlich nicht ändert, sollte sich der Kompensationsstrom schneller ändern können als der Datenübertragungsstrom. Wenn also beide Ströme sich mit Änderungsraten ändern können, die durch Zeitkonstanten beschreibbar sind, so ist die Zeitkonstante der Kompensationsstromänderung kleiner als diejenige der Datenübertragungsstromänderung. Minimale Abweichungen des Common-Mode-Sollpegels auf Grund der Einspeisung oder des Entnehmens eines Datenübertragungsstrom am Eingang eines Teilnehmers werden also sofort durch Entnehmen oder Einspeisen von Kompensationsstrom am Ausgang eines benachbarten Teilnehmers kompensiert, so dass der Common-Mode-Sollpegel bei der Datenübertragung unverändert bleibt.

Für die Kommunikation eines Teilnehmers mit dem Busmaster bzw. seinem zum Busmaster hin nächsten Nachbarteilnehmer wird also nach der Erfindung das Regelsignal ausgewertet, mit dem eine den Kompensationsstrom liefernde Stromquelle eines Busmasters bzw. des Nachbarteilnehmers angesteuert wird (Stellgröße für die Stromquelle). Der Common-Mode-Pegel oder Abweichungen dieses Pegels vom Sollpegel spielen für die Datenübertragung und die Auswertung der übertragenen Daten stromauf des Busses keine Rolle.

Die zuvor beschriebene Datenübertragung erfolgt also sukzessive von Teilnehmer zu benachbarten Teilnehmer hin zu demjenigen Teilnehmer der Reihenschaltung von Teilnehmern, der mit dem Busmaster verbunden ist. Wenn der Teilnehmer, der Daten zu dem Busmaster überträgt, der zu dem Busmaster benachbarte und über einen Zweidrahtleitungsabschnitt mit diesem verbundene Teilnehmer ist, dann erfolgt die Datenübertragung durch wiederholtes pulsartiges Einspeisen oder Entnehmen des Datenübertragungsstroms seitens des Teilnehmers an dessen Eingangsanschlüssen und durch wiederholtes pulsartiges Entnehmen oder Einspeisen von Kompensationsstrom seitens des Busmasters an dessen Busanschlüssen.

Der Common-Mode-Sollpegel unterliegt während des normalen Betriebs eines seriellen Kommunikationsbussystems Schwankungen, die beispielsweise durch elektromagnetische Einflüsse entstehen können. Es erfolgt also dauerhaft die Regelung auf den Sollpegel. Damit nun die für die Datenübertragung "gewollten" Beeinflussungen des Common-Mode-Pegels als solche Einflüsse erkannt werden, die der Datenübertragung zum Busmaster hin dienen, ist es zweckmäßig, wenn die Wiederholrate des pulsartigen Einspeisens oder Entnehmens des Datenübertragungsstroms mit einer Frequenz erfolgt, die kleiner als eine erste oder gleich einer ersten Grenzfrequenz ist, wobei nur solche Einspeisungen oder solche Entnahmen von Kompensationsstrom an den Ausgangsanschlüssen eines Teilnehmers oder an den Busanschlüssen des Busmasters als Datenübertragung über einen Zweidrahtleitungsabschnitt interpretiert werden, deren Wiederholrate kleiner als die erste oder gleich der ersten Grenzfrequenz ist.

Ein Teilnehmer, der bei dem zuvor genannten erfindungsgemäßen Verfahren der Datenübertragung von einem Teilnehmer zu dem Busmaster eingesetzt werden kann, ist erfindungsgemäß versehen mit
- einem Eingang mit zwei Eingangsanschlüssen und einem Ausgang mit zwei Ausgangsanschlüssen,
- einer steuerbaren Datenübertragungsstromquelle zum wiederholten pulsartigen Einspeisen oder Entnehmen von Datenübertragungsstrom an den beiden Eingangsanschlüssen zur Übertragung von Daten zu einem anderen Teilnehmer, dessen Ausgangsanschlüsse mit den Eingangsanschlüssen des Teilnehmers verbunden sind,
- einem Regelkreis zur Beibehaltung des vorgegebenen Common-Mode-Sollpegels an den beiden Ausgangsanschlüssen und
- einer steuerbaren Kompensationsstromquelle zum wiederholten pulsartigen Entnehmen oder Einspeisen eines Kompensationsstroms an den Ausgangsanschlüssen,
- wobei der Regelkreis ein die Kompensationsstromquelle ansteuerndes Regelsignal zur Einspeisung oder Entnahme von Kompensationsstrom zwecks Beibehaltung des vorgegebenen Common-Mode-Sollpegels aufweist, anhand dessen die Datenübertragungsstromquelle bei mit einer vorgegebenen Mindestgröße pro Zeiteinheit erfolgenden Überschreitung einer Veränderung des Regelsignals wiederholt pulsartig zur Einspeisung und Entnahme von Datenübertragungsstrom an den beiden Ausgangsanschlüssen steuerbar ist.

Wie bereits oben erwähnt, wird der Common-Mode-Sollpegel mittels eines Regelkreises von jedem der Teilnehmer auf dem zum stromab vom Busmaster weiter entfernt liegenden benachbarten Teilnehmer geregelt. Ändert sich nun der Regelsignal, das die Kompensationsstromquelle des Teilnehmers steuert, um mehr als ein vorgegebenes Mindestmaß pro Zeiteinheit, so ist dies ein Anzeichen dafür, dass Daten binär übertragen werden. Auch hier gilt wiederum zur Unterscheidung einer "normalen" Ausregelung des Common-Mode-Sollpegels gegenüber derjenigen für eine Datenübertragung, dass die pulsartige Einspeisung oder Entnahme von Datenübertragungsstrom mit einer Wiederholrate erfolgt, die eine Frequenz aufweist, welche kleiner als eine erste oder gleich einer ersten Grenzfrequenz ist, und dass das Regelsignal einem ersten Tiefpassfilter mit der ersten Grenzfrequenz zuführbar ist.

Der Common-Mode-Kommunikationskanal, also die Ausregelung von kleinsten Abweichungen des Common-Mode-Sollpegel vom Sollwert, kann gemäß einer Variante der Erfindung, die vorteilhafterweise mit dem zuvor beschriebenen erfindungsgemäßen Verfahren und dem zuvor beschriebenen erfindungsgemäßen Teilnehmer in Kombination angewendet werden kann, auch für die Übertragung von Daten von dem Busmaster zu einem der Teilnehmer und damit in zur Datenübertragung unter Verwendung differenzieller elektrischer Signale, z.B. differenzieller Spannungssignale, gleichen Datenübertragungsrichtung von dem Busmaster zu mindestens einem der Teilnehmer wahlweise auch dadurch genutzt werden, dass
- der Busmaster an seinen Busanschlüssen den Common-Mode-Pegel wiederholt pulsartig ausgehend von dem Sollpegel um einen innerhalb eines vorgegebenen Bereichs liegenden Wert verändert,
- die Veränderung des Common-Mode-Pegels um den vorgegebenen Wert an den Eingangsanschlüssen eines über einen Zweidrahtleitungsabschnitt mit dem Busmaster verbundenen ersten Teilnehmers in diesem erkannt wird und
- dies eine binäre Datenübertragung von dem Busmaster zu dem ersten Teilnehmer mittels eines nicht-differenziellen elektrischen Signals, z.B. eines nicht-differenziellen Spannungssignals repräsentiert.

Bei dieser Variante der Erfindung beeinflusst der Busmaster den Common-Mode-Pegel wiederhol pulsartig, und zwar ausgehend von dem Sollpegel und um einen innerhalb eines vorgegebenen Bereichs liegenden Wert. Diese Änderung wird am Eingang des mit dem Busmaster verbundenen Teilnehmers sensiert und als binäre Datenübertragung interpretiert. Der besagte Teilnehmer verändert nun wiederum seinerseits den Common-Mode-Pegel auf demjenigen Zweidrahtleitungsabschnitt, über den seine Ausgangsanschlüsse mit den Eingangsanschlüssen des nächsten Teilnehmers in der Reihenschaltung von Teilnehmern verbunden ist. Diese sukzessive binäre Datenübertragung setzt sich dann von Teilnehmer zu Teilnehmer fort.

Auch hier gilt in vorteilhafter Weiterbildung, dass die Wiederholrate der pulsartigen Veränderung des Common-Mode-Pegels um den vorgegebenen Wert mit einer Frequenz erfolgt, die kleiner als eine oder gleich einer zweiten Grenzfrequenz ist, und dass nur solche in einem Teilnehmer erkannte Änderungen des Common-Mode-Pegels um den vorgegebenen Wert als binäre Datenübertragung von dem Busmaster zu einem Teilnehmer interpretiert werden, deren Wiederholrate gleich der zweiten oder kleiner als die zweite Grenzfrequenz ist. Denn auch bei dieser nicht-differenziellen binären Datenübertragung muss eine Abweichung des Common-Mode-Pegels, die durch eine gewollte binäre Datenübertragung induziert ist, von einer "normalen" Abweichung des Common-Mode-Pegels, wie sie durch insbesondere elektromagnetische Einflüsse von außen beim Betrieb des Kommunikationsbussystems entstehen kann, unterschieden werden können.

Wenn man nun beide Varianten der Erfindung gemeinsam nutzen will, so sollten die beiden Grenzfrequenzen unterschiedlich sein, und zwar um mindestens den Faktor 10 oder 100 oder 1000, wobei es insbesondere von Vorteil ist, wenn die zweite Grenzfrequenz kleiner ist als die erste Grenzfrequenz. Damit ist die Bandbreite der Übertragung durch nicht-differenzielle Signale vom Busmaster zu den Teilnehmern geringer als die Bandbreite der binären Datenübertragung durch nicht-differenzielle Signale von den oder einem der Teilnehmer zum Busmaster. Beide nicht-differenziellen Datenübertragungskanäle weisen wiederum eine geringere Bandbreite als der mittels differenzieller Spannungssignale arbeitende Datenübertragungskanal des Kommunikationsbussystems.

Ein Teilnehmer, der, wie oben beschrieben, für den zusätzlichen Downstream-Übertragungskanal mittels nicht-differenzieller elektrischer Signale, wie z.B. differenzieller Spannungssignale genutzt werden kann, ist erfindungsgemäß versehen mit
- einer steuerbaren Referenzspannungsquelle zur wiederholten pulsartigen Veränderung des Common-Mode-Pegels an den Ausgangsanschlüssen um einen innerhalb eines vorgegebenen Bereichs liegenden Werts gegenüber dem vorgegebenen Sollpegel und
- einer Detektionsschaltung zur Erkennung einer Abweichung des Common-Mode-Pegels an den Eingangsanschlüssen um den vorgegebenen Wert gegenüber dem Sollpegel und zur Ausgabe eines Detektionssignals bei einer erkannten Abweichung des Common-Mode-Pegels um einen vorgegebenen Mindestwert,
- wobei die Referenzspannungsquelle zur Veränderung des Common-Mode-Pegels anhand des Detektionssignals der Detektionsschaltung steuerbar ist.

Bei einem derartigen Teilnehmer ist es von Vorteil, wenn die pulsartige Veränderung des Common-Mode-Pegels mit einer Wiederholrate erfolgt, die kleiner als eine zweite oder gleich einer zweiten Grenzfrequenz ist, und dass das Detektionssignal einem zweiten Tiefpassfilter mit der zweiten Grenzfrequenz zuführbar ist.

Es gilt auch hier wieder, dass dann, wenn Teilnehmer eingesetzt werden, mit denen die binäre Datenübertragung mit nicht-differenziellen Spannungssignalen realisiert werden können, die beiden Grenzfrequenzen um mindestens den Faktor 10 oder 100 oder 1000 voneinander verschieden sind, wobei es zweckmäßig ist, wenn die zweite Grenzfrequenz kleiner ist als die erste Grenzfrequenz.

Die Erfindung ist insbesondere geeignet zur Anwendung bei einem LVDS-Bussystem (Low Voltage Differential Signal). LVDS-Bussysteme können nun auch beispielsweise in einem Fahrzeug für die Innenraumbeleuchtung oder für die Ambient Light Anwendung eingesetzt werden. Die Hardware für ein derartiges System ist kostengünstig und einfach konzipiert, was insbesondere für Großserienanwendungen von Vorteil ist, was bei Automotive wünschenswert ist.

Die vorstehend beschriebene Erfindung lässt sich auch in Kombination mit einem Verfahren zur automatischen Adressierung der Teilnehmer eines Daisy-Chain-Bussystems anwenden, das Gegenstand der europäischen Patentanmeldung 20 20 217 493.4 vom 29. Dezember 2020 der Anmelderin ist, deren Gegenstand hiermit durch Bezugnahme zum Inhalt der vorliegenden Patentanmeldung gehört.

Außerdem lässt sich das erfindungsgemäße Verfahren darüber hinaus auch in Kombination mit einem Verfahren zum Überbrücken nicht funktionstüchtiger Teilnehmer eines Daisy-Chain-Bussystems anwenden, das Gegenstand der europäischen Patentanmeldung 20 217 497.5 vom 29. Dezember 2020 der Anmelderin ist, deren Gegenstand hiermit durch Bezugnahme zum Inhalt der vorliegenden Patentanmeldung gehört.

Die Erfindung wird nachfolgend anhand eines Ausführungsbeispiels und unter Bezugnahme auf die Zeichnung näher erläutert. Im Einzelnen zeigen dabei:
- Fig. 1: die für die Erfindung wesentlichen Komponenten eines Teilnehmers gemäß einem Ausführungsbeispiel der Erfindung und
- Fig. 2: die Verbindung vom Busmaster zum ersten Teilnehmer der Reihenschaltung von Teilnehmern sowie angedeutet die Verbindung benachbarter Teilnehmer der Reihenschaltung untereinander.

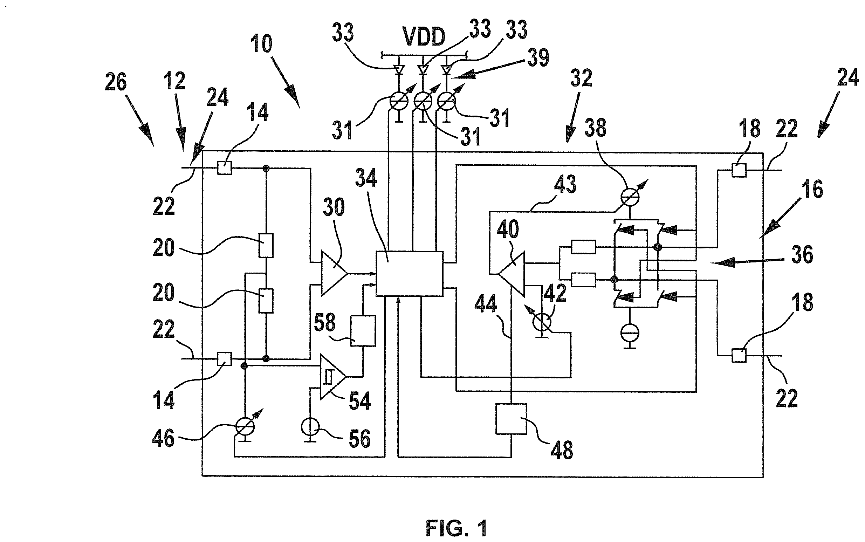

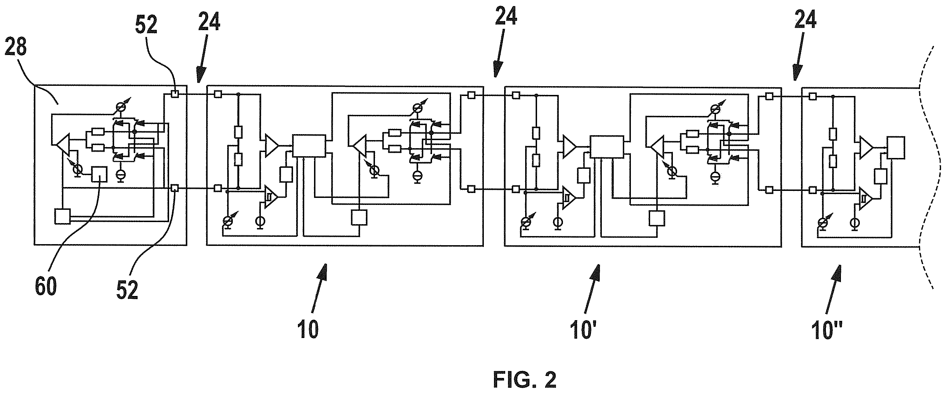

Fig. 1 zeigt den Aufbau eines Teilnehmers 10, der einen Eingang 12 mit zwei Eingangsanschlüssen 14 und einen Ausgang 16 mit zwei Ausganganschlüssen 18 aufweist. In bekannter Weise ist der Eingang 12 des Teilnehmers 10 durch einen in diesem Fall durch zwei in Reihenschaltung verschaltete Widerstände 20 abgeschlossen. Der Eingang 12 eines Teilnehmers 10 ist über zwei Leitungen 22 eines Zweidrahtleitungsabschnitts 24 mit den Ausgangsanschlüssen 18 eines benachbarten Teilnehmers verbunden (siehe Fig. 2). Die Aufeinanderfolge von Zweidrahtleitungsabschnitten 24 bildet den Zweidrahtdatenbus 26, über den sämtliche Teilnehmer 10 des Kommunikationsbussystems untereinander seriell als Reihenschaltung verbunden sind und diese Reihenschaltung mit dem Busmaster 28 verbunden ist.

Am Eingang 12 des Teilnehmers 10 befindet sich ein Empfänger 30, während sich am Ausgang 16 des Teilnehmers 10 ein Sender 32 befindet. Eine Datenverarbeitungseinheit 34 verarbeitet Daten bzw. Signale des Empfängers 30 zu Signalen und Daten für den Sender 32 und steuert überdies eine Applikation, für die der Teilnehmer 10 gedacht ist. Beispielsweise kann es sich um eine an einer Versorgungsspannung VDD angeschlossenen RGB-Leuchteinheit 29 handeln, bei der Stromquellen 31 für z.B. als Dioden 33 ausgeführte RGB-Leuchtmittel 33 durch die Datenverarbeitungseinheit 34 gesteuert werden.

Am Ausgang 16 des Teilnehmers 10 befindet sich ein Regelkreis 36 für die Regelung des Common-Mode-Pegels auf einen Sollwert. Hierzu erfolgt je nach Bedarf über eine Stromquelle, die nachfolgend Kompensationsstromquelle 38 genannt wird, die Einspeisung von Strom in den an den Ausgang 16 angeschlossenen Zweidrahtleitungsabschnitt 24 oder die Entnahme von Strom aus diesem Zweidrahtleitungsabschnitt 24. Der Common-Mode-Pegel wird durch einen Komparator 40 des Regelkreises 36 mit einem durch eine Referenzspannungsquelle 42 vorgegebenen Sollwert verglichen. Bei einer Abweichung steuert der Regelkreis 36 mittels eines Regelsignals 43 die Kompensationsstromquelle 38 entsprechend an. all diese Komponenten sind Teil des Senders 32.

Über eine Leitung 44 wird dem Regelkreis 36 ein Signal entnommen, das repräsentativ dafür ist, wie stark sich pro Zeiteinheit das Regelsignal 43 ändert. Wenn nämlich die Änderungen des Regelsignals 43 größer als die zu erwartenden "normalen" Änderungen des Regelsignals 43 auf Grund von Common-Mode-Pegelabweichungen infolge normaler äußerer Einflüsse sind, so ist dies ein Zeichen dafür, dass die Common-Mode-Pegelausregelung einen anderen Grund hat als die Beeinflussung durch beispielsweise elektromagnetische äußere Einflüsse. Bei diesem anderen Grund kann es sich erfindungsgemäß um eine versuchte Verschiebung des Common-Mode-Pegels eines mit dem Ausgang 16 des Teilnehmers verbundenen weiteren Teilnehmers zwecks binärer Datenübertragung durch nicht-differenzielle Signale handeln.

Diese binäre Datenübertragung wiederum wird, bezogen auf Fig. 2, beispielsweise von dem Teilnehmer 10' induziert. Der Teilnehmer 10' weist, wie der Teilnehmer 10 gemäß Fig. 1, an seinem Eingang 12 eine Stromquelle 46 auf, die nachfolgend auch Datenübertragungsstromquelle genannt wird. Mittels dieser Datenübertragungsstromquelle 46 wird nun am Eingang 12 des Teilnehmers in den angeschlossenen Zweidrahtleitungsabschnitt 24 Datenübertragungsstrom eingespeist oder entnommen. Das wiederum erkennt der Regelkreis 36 des Teilnehmers, dessen Ausgang 16 mit dem Eingang 12 des zuvor genannten Teilnehmers verbunden ist. Auf diese Art und Weise können also von Teilnehmer zu Teilnehmer binär Daten übertragen werden, und zwar mittels nicht-differenzieller Signale. Innerhalb jedes Teilnehmers 10, 10', 10" (siehe Fig. 2) erfolgt die "Weitergabe" einer binären Datenübertragung vom Ausgang 16 über die Leitung 44 zur Datenverarbeitungseinheit 34 des Teilnehmers und von dieser weiter zur Datenübertragungsstromquelle 46 dieses Teilnehmers. Damit nun die Signale auf der Leitung 44 als eine binäre Datenübertragung repräsentierende Signale aufgefasst werden, ist es zweckmäßig, das Signal mit einem Tiefpassfilter 48 zu filtern. Dessen Grenzfrequenz ist so gewählt, dass das Filter 48 Signale durchlässt, die die vorgegebene Wiederholrate der pulsartigen Veränderung des Signals auf der Leitung 44 aufweisen. Höherfrequente Ausregelungen des Common-Mode-Pegels am Ausgang 16 eines Teilnehmers 10 werden also nicht als binäre Datenübertragung interpretiert, sondern abgeblockt. In der Datenverarbeitungseinheit 34 wird nun das vom Tiefpassfilter 48 kommende Signal umgesetzt in ein entsprechendes Signal zur Ansteuerung der Datenübertragungsstromquelle 46 des besagten Teilnehmers, woraufhin nun in den an den Eingang 12 angeschlossenen Zweidrahtleitungsabschnitt 24 pulsartig ein Datenübertragungsstrom eingespeist oder aus dem Eingang 12 entnommen wird, was wiederum der Teilnehmer erkennt, dessen Ausgang 16 mit dem Eingang 12 des besagten Teilnehmers verbunden ist.

Die zuvor beschriebene Hardware kann auch dazu eingesetzt werden, nicht-differenzielle Signale für die Datenübertragung vom Busmaster zu den Teilnehmern zu nutzen. Hierzu kann der Busmaster den Common-Mode-Pegel "bewusst" verschieben. Wie anhand der Fig. 2 zu erkennen ist, weist auch der Busmaster 28 an seinem Busanschluss 50 einen Regelkreis 36 auf, wie er anhand von Fig. 1 für den Teilnehmer 10 beschrieben ist. Der Busmaster 28 ist mit seinen beiden Busanschlüssen 52 über einen Zweidrahtleitungsabschnitt 24 mit dem Teilnehmer 10 verbunden. Ändert der Busmaster 28 nun den Wert der Referenzspannungsquelle 42, was z.B. auf Veranlassen seiner Steuereinheit 60 erfolgt, so wird dies am Eingang 12 des Teilnehmers 10 sensiert, wozu der Teilnehmer 10 mit einem Komparator 54 versehen ist und somit durch Vergleich mit dem Spannungswert einer Referenzspannungsquelle 56 eine Abweichung des Common-Mode-Pegels erkennt. Nur solche Common-Mode-Pegeländerungen, deren Änderungsfrequenz kleiner ist als eine vorgegebene Grenzfrequenz, werden als für eine Datenübertragung "gewollte" Änderungen erkannt. Der Ausgang des Komparators 54 ist mit dem Eingang eines weiteren Tiefpassfilters 58 verbunden, dessen Ausgangssignal der Datenverarbeitungseinheit 34 zugeführt wird. Diese steuert dann die Referenzspannungsquelle 42 des Teilnehmers 10 an, so dass dieser Teilnehmer 10 nun an seinem Ausgang 16 eine Common-Mode-Pegelverschiebung vornimmt, um somit binär Daten zu übertragen, und zwar mittels nicht-differenzieller Signale.

### BEZUGSZEICHENLISTE

- 10: Teilnehmer
- 10: Teilnehmer
- 10: Teilnehmers
- 12: Eingang
- 14: Eingangsanschluss
- 16: Ausgang
- 18: Ausganganschluss
- 20: Widerstand
- 22: Leitung
- 24: Zweidrahtleitungsabschnitt
- 26: Zweidrahtdatenbus
- 28: Busmaster
- 29: RGB-Leuchteinheit
- 30: Empfänger
- 31: Stromquellen der RGB-Leuchteinheit
- 32: Sender
- 33: RGB-Leuchtmitteldioden
- 34: Datenverarbeitungseinheit
- 36: Regelkreis
- 38: Kompensationsstromquelle
- 40: Komparator
- 42: Referenzspannungsquelle
- 43: Regelsignal
- 44: Leitung
- 46: Datenübertragungsstromquelle
- 48: Tiefpassfilter
- 50: Busanschluss
- 52: Busanschluss
- 54: Komparator
- 56: Referenzspannungsquelle
- 58: Tiefpassfilter
- 60: Steuereinheit des Busmaster

## Patentansprüche

1. Verfahren zur Übertragung von Daten in einem seriellen Kommunikationsbussystem, bei dem ein Busmaster (28) und eine Vielzahl von Teilnehmern (10) als Reihenschaltung mit einem Zweidrahtleitungsabschnitt (24) zwischen Busanschlüssen (50, 52) des Busmasters (28) und einem der Teilnehmer (10) sowie mit jeweils benachbarte Teilnehmer (10) verbindenden Zweidrahtleitungsabschnitten (24) eines bei einem vorgegebenen Common-Mode-Sollpegel zu betreibenden, differenziellen Zweidrahtdatenbus (26) für eine Datenübertragung mittels differenzieller elektrischer Signale von dem Busmaster (28) zu mindestens einem der Teilnehmer (10) verbunden ist, wobei jeder Teilnehmer (10) einen Eingang (12) mit zwei mit einem Zweidrahtleitungsabschnitt (24) verbundenen Eingangsanschlüssen (14) und einen Ausgang (16) mit zwei ebenfalls mit einem Zweidrahtleitungsabschnitt (24) verbundenen Ausgangsanschlüssen (18) aufweist, wobei bei dem Verfahren
- Daten von einem ersten Teilnehmer (10) zu dem Busmaster (28) über den Zweidrahtdatenbus (26) in einer zur Datenübertragung mittels differenzieller elektrischer Signale entgegengesetzten Richtung übertragen werden, indem
a) ein erster Teilnehmer (10) an seinen Eingangsanschlüssen (14) zur Übertragung von Daten mittels nicht-differenzieller Signale zu einem über einen Zweidrahtleitungsabschnitt (24) verbundenen, benachbarten zweiten Teilnehmer (10) wiederholt pulsartig einen Datenübertragungsstrom mit einer vorgegebenen Größe einspeist oder entnimmt,
b) der zweite Teilnehmer (10) an seinen Ausgangsanschlüssen (18) zur Beibehaltung des vorgegebenen Common-Mode-Sollpegels wiederholt pulsartig einen dem Datenübertragungsstrom entsprechenden Kompensationsstrom entnimmt oder einspeist, **dadurch gekennzeichnet,**
**dass** ein im zweiten Teilnehmer (10) erzeugter Kompensationsstrompuls mit der zur Beibehaltung des Common-Mode-Sollpegels erforderlichen Größe eine binäre Datenübertragung von dem ersten Teilnehmer (10) an den zweiten Teilnehmer (10) repräsentiert und
c) dieser zweite Teilnehmer (10) an seinen Eingangsanschlüssen (14) zur Übertragung von Daten mittels nicht-differenzieller Signale zu einem über einen Zweidrahtleitungsabschnitt (24) benachbarten dritten Teilnehmer (10) wiederholt pulsartig einen Datenübertragungsstrom mit der vorgegebenen Größe einspeist oder entnimmt,
d) die Schritte b) und c) für jeden zwischen dem ersten Teilnehmer (10) und dem Busmaster (28) angeordneten Teilnehmer (10) durchgeführt werden und
e) der Busmaster (28) an seinen mit einem Zweidrahtleitungsabschnitt (24) verbundenen Busanschlüssen (50, 52) zur Beibehaltung des vorgegebenen Common-Mode-Sollpegels wiederholt pulsartig einen Kompensationsstrom entnimmt oder einspeist, wobei ein im Busmaster (28) erzeugter Kompensationsstrompuls mit der zur Beibehaltung des Common-Mode-Sollpegels erforderlichen Größe eine binäre Datenübertragung von dem mit dem Busmaster (28) über einen Zweidrahtleitungsabschnitt (24) verbundenen Teilnehmer (10) an den Busmaster (28) repräsentiert, womit die Datenübertragung von dem ersten Teilnehmer (10) zum Busmaster (28) abgeschlossen ist.

2. Verfahren nach Anspruch 1, **dadurch gekennzeichnet, dass** dann, wenn der Teilnehmer, der Daten zu dem Busmaster (28) überträgt, der zu dem Busmaster (28) benachbarte und über einen Zweidrahtleitungsabschnitt (24) mit diesem verbundene Teilnehmer (10) ist, die Datenübertragung durch wiederholtes pulsartiges Einspeisen oder Entnehmen des Datenübertragungsstroms seitens des Teilnehmers (10) an dessen Eingangsanschlüssen (14) und durch wiederholtes pulsartiges Entnehmen oder Einspeisen von Kompensationsstrom seitens des Busmasters (28) an dessen Busanschlüssen (50, 52) erfolgt.

3. Verfahren nach Anspruch 1 oder 2, **dadurch gekennzeichnet, dass** das pulsartige Einspeisen oder Entnehmen des Datenübertragungsstroms mit einer Frequenz erfolgt, die kleiner als eine erste oder gleich einer ersten Grenzfrequenz ist, und dass nur solche Einspeisungen oder solche Entnahmen von Kompensationsstrom an den Ausgangsanschlüssen (18) eines Teilnehmers (10) oder an den Busanschlüssen (50, 52) des Busmasters (28) als Datenübertragung über einen Zweidrahtleitungsabschnitt (24) interpretiert werden, deren Strompulse mit einer Frequenz aufeinander folgen, die kleiner als die erste oder gleich der ersten Grenzfrequenz ist.

4. Verfahren zur Übertragung von Daten in einem seriellen Kommunikationsbussystem, bei dem ein Busmaster (28) und eine Vielzahl von Teilnehmern (10) als Reihenschaltung mit einem Zweidrahtleitungsabschnitt (24) zwischen Busanschlüssen (50, 52) des Busmasters (28) und einem der Teilnehmer (20) sowie mit jeweils benachbarte Teilnehmer (10) verbindenden Zweidrahtleitungsabschnitten (24) eines bei einem vorgegebenen Common-Mode-Sollpegel zu betreibenden, differenziellen Zweidrahtdatenbus (26) für eine Datenübertragung mittels differenzieller elektrischer Signale von dem Busmaster (28) zu mindestens einem der Teilnehmer (10) verbunden ist, wobei jeder Teilnehmer (10) einen Eingang (12) mit zwei mit einem Zweidrahtleitungsabschnitt (24) verbundenen Eingangsanschlüssen (14) und einen Ausgang (16) mit zwei ebenfalls mit einem Zweidrahtleitungsabschnitt (24) verbundenen Ausgangsanschlüssen (18) aufweist, nach einem der Ansprüche 1 bis 3, wobei bei dem Verfahren
- Daten von dem Busmaster (28) zu einem der Teilnehmer (10) und damit in zur Datenübertragung mittels differenzieller elektrischer Signale gleichen Datenübertragungsrichtung von dem Busmaster (28) zu mindestens einem der Teilnehmer (10) wahlweise auch dadurch übertragen werden, dass
- der Busmaster (28) an seinen Busanschlüssen (50, 52) den Common-Mode-Pegel wiederholt pulsartig ausgehend von dem Sollpegel um einen innerhalb eines vorgegebenen Bereichs liegenden Wert verändert,
- die Veränderung des Common-Mode-Pegels um den vorgegebenen Wert an den Eingangsanschlüssen (14) eines über einen Zweidrahtleitungsabschnitt (24) mit dem Busmaster (28) verbundenen ersten Teilnehmers (10) in diesem erkannt wird und
- dies eine binäre Datenübertragung von dem Busmaster (28) zu dem ersten Teilnehmer (10) mittels eines nicht-differenziellen elektrischen Signals, wie z.B. Spannungssignals repräsentiert.

5. Verfahren nach Anspruch 4, **dadurch gekennzeichnet, dass** die binäre Datenübertragung zwischen dem Busmaster (28) und dem ersten Teilnehmer (10) und weiter von dem ersten Teilnehmer (10) zu dem zu diesem benachbarten zweiten Teilnehmer (10) und so weiter von Teilnehmer (10) zu Teilnehmer (10) bis zu einem Teilnehmer (10) fortgesetzt wird, dem die Datenübertragung gilt.

6. Verfahren nach Anspruch 4 oder 5, **dadurch gekennzeichnet, dass** die pulsartige Veränderung des Common-Mode-Pegels um den vorgegebenen Wert mit einer Frequenz erfolgt, die kleiner als eine oder gleich einer zweiten Grenzfrequenz ist, und dass nur solche in einem Teilnehmer (10) erkannten Änderungen des Common-Mode-Pegels um den vorgegebenen Wert als binäre Datenübertragung von dem Busmaster (28) zu einem Teilnehmer (10) interpretiert werden, deren Frequenz gleich der zweiten oder kleiner als die zweite Grenzfrequenz ist.

7. Verfahren nach Anspruch 6 sowie nach Anspruch 4 oder 5 und nach Anspruch 3, **dadurch gekennzeichnet, dass** die beiden Grenzfrequenzen um mindestens den Faktor 10 oder 100 oder 1000 voneinander verschieden sind.

8. Verfahren nach Anspruch 7, **dadurch gekennzeichnet, dass** die zweite Grenzfrequenz kleiner ist als die erste Grenzfrequenz.

9. Teilnehmer eines seriellen Kommunikationsbussystems, bei dem ein Busmaster (28) und eine Vielzahl von Teilnehmern (10) als Reihenschaltung mit einem Zweidrahtleitungsabschnitt (24) zwischen Busanschlüssen (50, 52) des Busmasters (28) und einem der Teilnehmer (10) sowie mit jeweils benachbarte Teilnehmer (10) verbindenden Zweidrahtleitungsabschnitten (24) eines bei einem vorgegebenen Common-Mode-Sollpegel zu betreibenden, differenziellen Zweidrahtdatenbus (26) für eine Datenübertragung mittels differenzieller elektrischer Signale von dem Busmaster (28) zu mindestens einem der Teilnehmer (10) verbunden ist, wobei jeder Teilnehmer (10) einen Eingang (12) mit zwei mit einem Zweidrahtleitungsabschnitt (24) verbundenen Eingangsanschlüssen (14) und einen Ausgang (16) mit zwei ebenfalls mit einem Zweidrahtleitungsabschnitt (24) verbundenen Ausgangsanschlüssen (18) aufweist, wobei der Teilnehmer versehen ist mit
- einem Eingang (12) mit zwei Eingangsanschlüssen (14) und einem Ausgang (16) mit zwei Ausgangsanschlüssen (18),
- einer steuerbaren Datenübertragungsstromquelle (46) zum wiederholten pulsartigen Einspeisen oder Entnehmen von Datenübertragungsstrom an den beiden Eingangsanschlüssen (14) zur Übertragung von Daten zu einem anderen Teilnehmer, dessen Ausgangsanschlüsse (18) mit den Eingangsanschlüssen (14) des Teilnehmers verbunden sind,
- einem Regelkreis zur Beibehaltung des vorgegebenen Common-Mode-Sollpegels an den beiden Ausgangsanschlüssen (18) und
- einer steuerbaren Kompensationsstromquelle (38) zum wiederholten pulsartigen Entnehmen oder Einspeisen eines Kompensationsstroms an den Ausgangsanschlüssen (18),
- wobei der Regelkreis ein die Kompensationsstromquelle (38) ansteuerndes Regelsignal zur Einspeisung oder Entnahme von Kompensationsstrom zwecks Beibehaltung des vorgegebenen Common-Mode-Sollpegels aufweist, anhand dessen die Datenübertragungsstromquelle (46) bei mit einer vorgegebenen Mindestgröße pro Zeiteinheit erfolgenden Überschreitung einer Veränderung des Regelsignals (43) wiederholt pulsartig zur Einspeisung und Entnahme von Datenübertragungsstrom an den beiden Ausgangsanschlüssen (18) steuerbar ist, und
- wobei der Teilnehmer an seinen Eingangsanschlüssen (14) zur Übertragung von Daten mittel nicht-differenzieller Signale zu einem über einen Zweidrahtleitungsabschnitt (24) benachbarten Teilnehmer wiederholt pulsartig den Datenübertragungsstrom einspeist oder entnimmt.

10. Teilnehmer nach Anspruch 9, **dadurch gekennzeichnet, dass** die pulsartige Einspeisung oder Entnahme von Datenübertragungsstrom mit einer Wiederholrate erfolgt, die eine Frequenz aufweist, welche kleiner als eine erste oder gleich einer ersten Grenzfrequenz ist, und dass das Regelsignal (43) bei seiner Veränderung mit Überschreitung der vorgegebenen Mindestgröße einem ersten Tiefpassfilter (48) mit der ersten Grenzfrequenz zuführbar ist.

11. Teilnehmer eines seriellen Kommunikationsbussystems, bei dem ein Busmaster (28) und eine Vielzahl von Teilnehmern (10) als Reihenschaltung mit einem Zweidrahtleitungsabschnitt (24) zwischen Busanschlüssen (50, 52) des Busmasters (28) und einem der Teilnehmer (10) sowie mit jeweils benachbarte Teilnehmer (10) verbindenden Zweidrahtleitungsabschnitten (24) eines bei einem vorgegebenen Common-Mode-Sollpegel zu betreibenden, differenziellen Zweidrahtdatenbus (26) für eine Datenübertragung mittels differenzieller elektrischer Signale von dem Busmaster (28) zu mindestens einem der Teilnehmer (10) verbunden ist, wobei jeder Teilnehmer (10) einen Eingang (12) mit zwei mit einem Zweidrahtleitungsabschnitt (24) verbundenen Eingangsanschlüssen (14) und einen Ausgang (16) mit zwei ebenfalls mit einem Zweidrahtleitungsabschnitt (24) verbundenen Ausgangsanschlüssen (18) aufweist, nach Anspruch 9 oder 10, wobei der Teilnehmer (10) versehen ist mit
- einer steuerbaren Referenzspannungsquelle (42) zur wiederholten pulsartigen Veränderung des Common-Mode-Pegels an den Ausgangsanschlüssen (18) um einen innerhalb eines vorgegebenen Bereichs liegenden Werts gegenüber dem vorgegebenen Sollpegel und
- einer Detektionsschaltung zur Erkennung einer Abweichung des Common-Mode-Pegels an den Eingangsanschlüssen (14) um den vorgegebenen Wert gegenüber dem Sollpegel und zur Ausgabe eines Detektionssignals bei einer erkannten Abweichung des Common-Mode-Pegels um einen vorgegebenen Mindestwert,
- wobei die Referenzspannungsquelle (42) zur Veränderung des Common-Mode-Pegels anhand des Detektionssignals der Detektionsschaltung steuerbar ist.

12. Teilnehmer nach Anspruch 11, **dadurch gekennzeichnet, dass** die pulsartige Veränderung des Common-Mode-Pegels mit einer Wiederholrate erfolgt, die kleiner als eine zweite oder gleich einer zweiten Grenzfrequenz ist, und dass das Detektionssignal einem zweiten Tiefpassfilter (58) mit der zweiten Grenzfrequenz zuführbar ist.

13. Teilnehmer nach Anspruch 10 und 12, **dadurch gekennzeichnet, dass** die beiden Grenzfrequenzen um mindestens den Faktor 10 oder 100 oder 1000 voneinander verschieden sind.

14. Teilnehmer nach Anspruch 13, **dadurch gekennzeichnet, dass** die zweite Grenzfrequenz kleiner ist als die erste Grenzfrequenz.

15. Kommunikationssystem mit einem Busmaster (28) und einer mit diesem verbundenen Reihenschaltung von Teilnehmern (10) nach einem der Ansprüche 9 bis 14 und/oder zur Durchführung des Verfahrens nach einem der Ansprüche 1 bis 8.

## Claims

1. A method for transmitting data in a serial communication bus system, in which a bus master (28) and a plurality of subscribers (10) are connected in series with a two-wire line portion (24) between bus terminals (50, 52) of the bus master (28) and one of the subscribers (10) and with two-wire line portions (24), each connecting adjacent subscribers (10), of a differential two-wire data bus (26) to be operated at a predetermined common mode target level for data transmission by means of differential electrical signals from the bus master (28) to at least one of the subscribers (10), each subscriber (10) comprising an input (12) having two input terminals (14) connected to a two-wire line portion (24) and an output (16) having two output terminals (18) also connected to a two-wire line portion (24), in the method
- data is transmitted from a first subscriber (10) to the bus master (28) via the two-wire data bus (26) in a direction opposite to the data transmission by means of differential electrical signals, in that
a) a first subscriber (10) repeatedly feeds in or draws a data transmission current of a predetermined magnitude in a pulse-like manner at its input terminals (14) for transmitting data by means of non-differential signals to an adjacent second subscriber (10) connected via a two-wire line portion (24),
b) the second subscriber (10) repeatedly draws or feeds in a compensation current corresponding to the data transmission current in a pulse-like manner at its output terminals (18) for maintaining the predetermined common mode target level,
**characterized in that**
a compensation current pulse generated in the second subscriber (10) with the magnitude required to maintain the common mode target level represents a binary data transmission from the first subscriber (10) to the second subscriber (10), and
c) said second subscriber (10) repeatedly feeds in or draws a data transmission current of a predetermined magnitude in a pulse-like manner at its input terminals (14) for transmitting data by means of non-differential signals to an adjacent third subscriber (10) connected via a two-wire line portion (24),
d) the steps b) and c) are performed for each subscriber (10) arranged between the first subscriber (10) and the bus master (28), and
e) the bus master (28) repeatedly draws or feeds in a compensation current in a pulse-like manner at its bus terminals (50, 52) connected to a two-wire line portion (24) for maintaining the predetermined common mode target level, wherein a compensation current pulse generated in the bus master (28) with the magnitude required for maintaining the common mode target level represents a binary data transmission from the subscriber (10) connected to the bus master (28) via a two-wire line portion (24) to the bus master (28), whereby the data transmission from the first subscriber (10) to the bus master (28) is completed.

2. The method according to claim 1, **characterized in that** if the subscriber transmitting data to the bus master (28) is the subscriber (10) adjacent to the bus master (28) and connected thereto via a two-wire line portion (24), data transmission is performed by repeatedly feeding in or drawing data transmission current on the part of the subscriber (10) at its input terminals (14) in a pulse-like manner and by repeatedly drawing or feeding in compensation current on the part of the bus master (28) at its bus terminals (50, 52) in a pulse-like manner.

3. The method according to claim 1 or 2, **characterized in that** the pulse-like feeding or drawing of the data transmission current is at a frequency which is smaller than a first or equal to a first cutoff frequency, and **in that** only such infeeds or such draws of compensation current at the output terminals (18) of a subscriber (10) or at the bus terminals (50, 52) of the bus master (28) are interpreted as data transmission via a two-wire line section (24), the current pulses of which follow one another at a frequency which is smaller than the first or equal to the first cutoff frequency.

4. A method for transmitting data in a serial communication bus system, in which a bus master (28) and a plurality of subscribers (10) are connected in series with a two-wire line portion (24) between bus terminals (50, 52) of the bus master (28) and one of the subscribers (20) and with two-wire line portions (24), each connecting adjacent subscribers (10), of a differential two-wire data bus (26) to be operated at a predetermined common mode target level for data transmission by means of differential electrical signals from the bus master (28) to at least one of the subscribers (10), each subscriber (10) comprising an input (12) having two input terminals (14) connected to a two-wire line portion (24) and an output (16) having two output terminals (18) also connected to a two-wire line portion (24), according to any one of claims 1 to 3, in the method
- data is transmitted from the bus master (28) to one of the subscribers (10) and thus in the same data transmission direction as for data transmission by means of differential electrical signals from the bus master (28) to at least one of the subscribers (10) optionally also in that
- the bus master (28) repeatedly changes the common mode level at its bus terminals (50, 52) in a pulse-like manner, starting from the target level, by a value within a predetermined range,
- the change in the common mode level by the predetermined value at the input terminals (14) of a first subscriber connected to the bus master (28) via a two-wire line portion (24) is detected in the subscriber (10), and
- this represents a binary data transmission from the bus master (28) to the first subscriber (10) by means of a non-differential electrical signal, e.g. a non-differential voltage signal.

5. The method according to claim 4, **characterized in that** the binary data transmission between the bus master (28) and the first subscriber (10) and further from the first subscriber (10) to the second subscriber (10) adjacent thereto and so on from subscriber (10) to subscriber (10) up to a subscriber (10) to which the data transmission applies.

6. The method according to claim 4 or 5, **characterized in that** the pulse-like change in the common mode level by the predetermined value is at a frequency which is smaller than or equal to a second cutoff frequency, and **in that** only such changes in the common mode level by the predetermined value detected in a subscriber (10) are interpreted as binary data transmission from the bus master (28) to a subscriber (10), the frequency of which is equal to or smaller than the second cutoff frequency.

7. The method according to claim 6 and according to claims 4 or 5 and according to claim 3, **characterized in that** the two cutoff frequencies differ from each other by at least a factor of 10 or 100 or 1000.

8. The method according to claim 7, **characterized in that** the second cutoff frequency is smaller than the first cutoff frequency.

9. A subscriber of a serial communication bus system, in which a bus master (28) and a plurality of subscribers (10) are connected in series with a two-wire line portion (24) between bus terminals (50, 52) of the bus master (28) and one of the subscribers (10) and with two-wire line portions (24), each connecting adjacent subscribers (10), of a differential two-wire data bus (26) to be operated at a predetermined common mode target level for data transmission by means of differential electrical signals from the bus master (28) to at least one of the subscribers (10), each subscriber (10) comprising an input (12) having two input terminals (14) connected to a two-wire line portion (24) and an output (16) having two output terminals (18) also connected to a two-wire line portion (24), the subscriber being provided with
- an input (12) having two input terminals (14) and an output (16) having two output terminals (18),
- a controllable data transmission current source (46) for repeatedly feeding in and drawing a data transmission current at the two input terminals (14) in a pulse-like manner for transmitting data to another subscriber, the output terminals (18) of which are connected to the input terminals (14) of the subscriber,
- a control circuit for maintaining the predetermined common mode target level at the two output terminals (18), and
- a controllable compensation current source (38) for repeatedly drawing or feeding in a compensation current at the output terminals (18) in a pulse-like manner,
- wherein the control circuit comprises a control signal driving the compensation current source (38) in order to feed in or draw compensation current for the purpose of maintaining the predetermined common mode target level, on the basis of which signal the data transmission current source (46) can be repeatedly controlled in a pulse-like manner in order to feed in and draw data transmission current at the two output terminals (18) if a change in the control signal (43) occurs with a predetermined minimum magnitude per unit of time, and
wherein the subscriber repeatedly feeds in or draws the data transmission current in a pulse-like manner at its input terminals (14) for transmitting data by means of non-differential signals to an adjacent subscriber connected via a two-wire line portion (24),

10. The subscriber according to claim 9, **characterized in that** the pulse-like feeding or drawing of data transmission current is at a repetition rate having a frequency smaller than or equal to a first cutoff frequency, and **in that** the control signal (43) is adapted to be supplied to a first low-pass filter (48) at the first cutoff frequency when it varies with exceeding the predetermined minimum magnitude.

11. A subscriber of a serial communication bus system, in which a bus master (28) and a plurality of subscribers (10) are connected in series with a two-wire line portion (24) between bus terminals (50, 52) of the bus master (28) and one of the subscribers (10) and with two-wire line portions (24), each connecting adjacent subscribers (10), of a differential two-wire data bus (26) to be operated at a predetermined common mode target level for data transmission by means of differential electrical signals from the bus master (28) to at least one of the subscribers (10), each subscriber (10) comprising an input (12) having two input terminals (14) connected to a two-wire line portion (24) and an output (16) having two output terminals (18) also connected to a two-wire line portion (24), according to claim 9 or 10, the subscriber (10) being provided with
- a controllable reference voltage source (42) for repeatably changing the common-mode level at the output terminals (18) in a pulse-like manner by a value within a predetermined range with respect to the predetermined target level, and
- a detection circuit for detecting a deviation of the common mode level at the input terminals (14) by the predetermined value with respect to the target level and for outputting a detection signal when a deviation of the common mode level by a predetermined minimum value is detected,
- wherein the reference voltage source (42) is controllable to change the common mode level based on the detection signal of the detection circuit.

12. The subscriber according to claim 11, **characterized in that** the pulse-like change in the common mode level is at a repetition rate smaller than a second or equal to a second cutoff frequency, and **in that** the detection signal is adapted to be supplied to a second low-pass filter (58) at the second cutoff frequency.

13. The subscriber according to claim 10 and 12, **characterized in that** the two cutoff frequencies differ from each other by at least a factor of 10 or 100 or 1000.

14. The subscriber according to claim 13, **characterized in that** the second cutoff frequency is smaller than the first cutoff frequency.

15. A communication system having a bus master (28) and a series connection of subscribers (10) connected thereto according to any one of claims 9 to 14, and/or for performing the method according to any one of claims 1 to 8.

## Revendications

1. Procédé de transmission de données dans un système de bus de communication série, dans lequel un maître de bus (28) et une pluralité de participants (10) sont interconnectés en tant que montage en série par un tronçon de ligne à deux fils (24), situé entre des bornes de bus (50, 52) du maître de bus (28) et l'un des participants (10), ainsi que par des tronçons de ligne à deux fils (24), interconnectant des participants voisins respectifs (10), d'un bus de données à deux fils (26) différentiel, à exploiter à un niveau de consigne prédéfini en mode commun, pour une transmission de données au moyen de signaux électriques différentiels depuis le maître de bus (28) vers au moins l'un des participants (10), chaque participant (10) comportant une entrée (12) avec deux bornes d'entrée (14) connectées à un tronçon de ligne à deux fils (24) et une sortie (16) avec deux bornes de sortie (18) également connectées à un tronçon de ligne à deux fils (24), procédé dans lequel
- des données sont transmises d'un premier participant (10) au maître de bus (28) via le bus de données à deux fils (26) dans un sens opposé à celui de la transmission de données au moyen de signaux électriques différentiels, du fait que
a) un premier participant (10) injecte ou prélève de manière répétée, sous forme d'impulsions, au niveau de ses bornes d'entrée (14), un courant de transmission de données d'une ampleur prédéfinie, afin de transmettre des données au moyen de signaux non différentiels à un deuxième participant (10) voisin connecté via un tronçon de ligne à deux fils (24),
b) le deuxième participant (10) prélève ou injecte de manière répétée, sous forme d'impulsions, au niveau de ses bornes de sortie (18), un courant de compensation correspondant au courant de transmission de données, afin de maintenir le niveau de consigne prédéfini en mode commun,
**caractérisé en ce que**
une impulsion de courant de compensation générée dans le deuxième participant (10) et ayant l'ampleur nécessaire pour maintenir le niveau de consigne en mode commun représente une transmission de données binaire du premier participant (10) vers le deuxième participant (10), et
c) ce deuxième participant (10) injecte ou prélève de manière répétée, sous forme d'impulsions, au niveau de ses bornes d'entrée (14), un courant de transmission de données de l'ampleur prédéfinie, afin de transmettre des données au moyen de signaux non différentiels vers un troisième participant (10) voisin via un tronçon de ligne à deux fils (24),
d) les étapes b) et c) sont exécutées pour chaque participant (10) situé entre le premier participant (10) et le maître de bus (28), et
e) le maître de bus (28) prélève ou injecte de manière répétée, sous forme d'impulsions, au niveau de ses bornes de bus (50, 52) connectées à un tronçon de ligne à deux fils (24), un courant de compensation, afin de maintenir le niveau de consigne prédéfini en mode commun, sachant qu'une impulsion de courant de compensation générée dans le maître de bus (28) et ayant l'ampleur nécessaire pour maintenir le niveau de consigne prédéfini en mode commun représente une transmission de données binaire depuis le participant (10), connecté au maître de bus (28) via un tronçon de ligne à deux fils (24), vers le maître de bus (28), moyennant quoi la transmission de données du premier participant (10) vers le maître de bus (28) est achevée.

2. Procédé selon la revendication 1,
**caractérisé en ce que**, lorsque le participant qui transmet des données au maître de bus (28) est le participant (10) voisin du maître de bus (28) et connecté à celui-ci via un tronçon de ligne à deux fils (24), la transmission de données s'effectue par injection ou prélèvement répété(e) par impulsions du courant de transmission de données du côté participant (10), au niveau de ses bornes d'entrée (14), et par prélèvement ou injection répété(e) par impulsions du courant de compensation du côté maître de bus (28), au niveau de ses bornes de bus (50, 52).

3. Procédé selon la revendication 1 ou 2,
**caractérisé en ce que** l'injection ou le prélèvement par impulsions du courant de transmission de données s'effectue à une fréquence inférieure ou égale à une première fréquence limite, et **en ce que** seules les injections ou seuls les prélèvements de courant de compensation au niveau des bornes de sortie (18) d'un participant (10) ou au niveau des bornes de bus (50, 52) du maître de bus (28) sont interprétés comme une transmission de données via un tronçon de ligne à deux fils (24) dont les impulsions se succèdent à une fréquence qui est inférieure ou égale à la première fréquence limite.

4. Procédé de transmission de données dans un système de bus de communication série, dans lequel un maître de bus (28) et une pluralité de participants (10) sont interconnectés en tant que montage en série par un tronçon de ligne à deux fils (24), situé entre des bornes de bus (50, 52) du maître de bus (28) et l'un des participants (20), ainsi que par des tronçons de ligne à deux fils (24), interconnectant des participants voisins respectifs (10), d'un bus de données à deux fils (26) différentiel, à exploiter à un niveau de consigne prédéfini en mode commun, pour une transmission de données au moyen de signaux électriques différentiels depuis le maître de bus (28) vers au moins l'un des participants (10), chaque participant (10) comportant une entrée (12) avec deux bornes d'entrée (14) connectées à un tronçon de ligne à deux fils (24) et une sortie (16) avec deux bornes de sortie (18) également connectées à un tronçon de ligne à deux fils (24), selon l'une des revendications 1 à 3, procédé dans lequel
- les données sont transmises du maître de bus (28) à l'un des participants (10) et donc dans le même sens de transmission de données que celui de la transmission de données au moyen de signaux électriques différentiels du maître de bus (28) à au moins l'un des participants (10), de manière sélective également par le fait que
- le maître de bus (28) modifie de manière répétée, sous forme d'impulsions, au niveau de ses bornes de bus (50, 52), le niveau en mode commun à partir du niveau de consigne d'une valeur comprise dans une plage prédéfinie,
- la modification du niveau en mode commun de la valeur prédéfinie est détectée au niveau des bornes d'entrée (14) d'un premier participant (10) connecté au maître de bus (28) via un tronçon de ligne à deux fils (24), et
- cela représente une transmission de données binaire du maître de bus (28) vers le premier participant (10) au moyen d'un signal électrique non différentiel, tel qu'un signal de tension.

5. Procédé selon la revendication 4,
**caractérisé en ce que** la transmission de données binaire se poursuit entre le maître de bus (28) et le premier participant (10), puis du premier participant (10) vers le deuxième participant (10) voisin de celui-ci, et ainsi de suite d'un participant (10) à un autre participant (10) jusqu'à un participant (10) auquel est adressée la transmission de données.

6. Procédé selon la revendication 4 ou 5,
**caractérisé en ce que** la modification sous forme d'impulsions du niveau en mode commun de la valeur prédéfinie s'effectue à une fréquence inférieure ou égale à une deuxième fréquence limite, et **en ce que** seules les modifications du niveau en mode commun de la valeur prédéfinie, détectées dans un participant (10), sont interprétées comme transmission de données binaire du maître de bus (28) vers un participant (10), dont la fréquence est égale ou inférieure à la deuxième fréquence limite.

7. Procédé selon la revendication 6 et selon la revendication 4 ou 5 et selon la revendication 3,
**caractérisé en ce que** les deux fréquences limites diffèrent l'une de l'autre d'au moins un facteur de 10 ou de 100 ou de 1 000.

8. Procédé selon la revendication 7,
**caractérisé en ce que** la deuxième fréquence limite est inférieure à la première fréquence limite.

9. Participant à un système de bus de communication série, dans lequel un maître de bus (28) et une pluralité de participants (10) sont interconnectés en tant que montage en série par un tronçon de ligne à deux fils (24), situé entre des bornes de bus (50, 52) du maître de bus (28) et l'un des participants (10), ainsi que par des tronçons de ligne à deux fils (24), interconnectant des participants voisins respectifs (10), d'un bus de données à deux fils (26) différentiel, à exploiter à un niveau de consigne prédéfini en mode commun, pour une transmission de données au moyen de signaux électriques différentiels depuis le maître de bus (28) vers au moins l'un des participants (10), chaque participant (10) comportant une entrée (12) avec deux bornes d'entrée (14) connectées à un tronçon de ligne à deux fils (24) et une sortie (16) avec deux bornes de sortie (18) également connectées à un tronçon de ligne à deux fils (24), le participant comprenant
- une entrée (12) avec deux bornes d'entrée (14) et une sortie (16) avec deux bornes de sortie (18),
- une source de courant de transmission de données commandable (46) pour l'injection ou le prélèvement répété(e), par impulsions, d'un courant de transmission de données au niveau des deux bornes d'entrée (14) pour la transmission de données à un autre participant dont les bornes de sortie (18) sont connectées aux bornes d'entrée (14) du participant,
- un circuit de régulation pour maintenir le niveau de consigne prédéfini en mode commun au niveau des deux bornes de sortie (18), et
- une source de courant de compensation commandable (38) pour le prélèvement ou l'injection répété(e), par impulsions, d'un courant de compensation au niveau des bornes de sortie (18),
sachant que
- le circuit de régulation comprend un signal de régulation commandant la source de courant de compensation (38) pour injecter ou prélever le courant de compensation afin de maintenir le niveau de consigne prédéfini en mode commun, à l'aide duquel la source de courant de transmission de données (46) peut être commandée de manière répétée par impulsions, pour injecter et prélever le courant de transmission de données au niveau des deux bornes de sortie (18), en cas de dépassement d'une modification du signal de régulation (43) d'une valeur minimale prédéfinie par unité de temps, et
- le participant injecte ou prélève de manière répétée par impulsions le courant de transmission de données au niveau de ses bornes d'entrée (14) pour transmettre des données au moyen de signaux non différentiels à un participant voisin (10) connecté via un tronçon de ligne à deux fils (24).

10. Participant selon la revendication 9,
**caractérisé en ce que** l'injection ou le prélèvement par impulsions du courant de transmission de données s'effectue avec un taux de répétition dont la fréquence est inférieure ou égale à une première fréquence limite, et **en ce que** le signal de régulation (43), lors de sa modification avec dépassement de la valeur minimale prédéfinie, peut être acheminé vers un premier filtre passe-bas (48) à la première fréquence limite.

11. Participant à un système de bus de communication série, dans lequel un maître de bus (28) et une pluralité de participants (10) sont interconnectés en tant que montage en série par un tronçon de ligne à deux fils (24), situé entre des bornes de bus (50, 52) du maître de bus (28) et l'un des participants (10), ainsi que par des tronçons de ligne à deux fils (24), interconnectant des participants voisins respectifs (10), d'un bus de données à deux fils (26) différentiel, à exploiter à un niveau de consigne prédéfini en mode commun, pour une transmission de données au moyen de signaux électriques différentiels depuis le maître de bus (28) vers au moins l'un des participants (10), chaque participant (10) comportant une entrée (12) avec deux bornes d'entrée (14) connectées à un tronçon de ligne à deux fils (24) et une sortie (16) avec deux bornes de sortie (18) également connectées à un tronçon de ligne à deux fils (24), selon la revendication 9 ou 10, le participant (10) comprenant
- une source de tension de référence commandable (42) pour modifier de manière répétée et par impulsions, au niveau des bornes de sortie (18), le niveau en mode commun d'une valeur comprise dans une plage prédéfinie par rapport au niveau de consigne prédéfini, et
- un circuit de détection pour détecter, au niveau des bornes d'entrée (14), un écart du niveau en mode commun d'une valeur prédéfinie par rapport au niveau de consigne et pour émettre un signal de détection en cas de détection d'un écart du niveau en mode commun d'une valeur minimale prédéfinie,
- la source de tension de référence (42) pouvant être commandée pour modifier le niveau en mode commun à l'aide du signal de détection du circuit de détection.

12. Participant selon la revendication 11,
**caractérisé en ce que** la modification par impulsions du niveau en mode commun s'effectue avec un taux de répétition qui est inférieur ou égal à une deuxième fréquence limite, et **en ce que** le signal de détection peut être acheminé vers un deuxième filtre passe-bas (58) à la deuxième fréquence limite.

13. Participant selon les revendications 10 et 12,
**caractérisé en ce que** les deux fréquences limites diffèrent l'une de l'autre d'au moins un facteur de 10 ou de 100 ou de 1 000.

14. Participant selon la revendication 13,
**caractérisé en ce que** la deuxième fréquence limite est inférieure à la première fréquence limite.

15. Système de communication comprenant un maître de bus (28) et un montage en série de participants (10) connectés à celui-ci, selon l'une des revendications 9 à 14, et/ou pour la mise en œuvre du procédé selon l'une des revendications 1 à 8.
